# EUROPÄISCHE PATENTSCHRIFT

(11) **EP 4 190 615 B1**
(45) Veröffentlichungstag und Bekanntmachung des Hinweises auf die Patenterteilung: **09.07.2025**
(21) Anmeldenummer: 23152298.8
(22) Anmeldetag: 21.05.2019
(51) Int. Cl.: B60K 35/85, B60K 35/28, B60K 35/22, G01S 7/04, G01S 13/00, G01S 13/931

(54) **VERFAHREN UND ANZEIGEEINRICHTUNG ZUR VISUALISIERUNG EINER ANORDNUNG SOWIE WIRKUNGSWEISE VON UMFELDSENSOREN EINES KRAFTFAHRZEUGS**
METHOD AND A DISPLAY DEVICE FOR VISUALISING AN ARRANGEMENT AND METHOD OF OPERATION OF SURROUNDINGS SENSORS OF A MOTOR VEHICLE
PROCÉDÉ ET DISPOSITIF D'AFFICHAGE POUR VISUALISER UN AGENCEMENT ET LE MODE D'ACTION DE CAPTEURS D'ENVIRONNEMENT D'UN VÉHICULE AUTOMOBILE

(30) Priorität: 10.08.2018 DE 102018213554
(43) Veröffentlichungstag der Anmeldung: 07.06.2023
(62) Teilanmeldung aus: 19725972.4
(73) Patentinhaber: Audi AG, 85045 Ingolstadt (DE)
(72) Erfinder: KÜHNE, Marcus, 92339 Beilngries (DE)
(74) Vertreter: Hofstetter, Schurack & Partner

(56) Entgegenhaltungen:
- DE-A1- 102008 036 009
- DE-A1- 102014 214 506
- DE-A1- 102016 210 611
- DE-A1- 102016 211 646
- US-A1- 2017 076 606
- US-A1- 2017 129 426

## Beschreibung

Die Erfindung betrifft ein Verfahren und eine Anzeigeeinrichtung zur Visualisierung einer Anordnung sowie Wirkungsweise von Umfeldsensoren eines Kraftfahrzeugs. Des Weiteren betrifft die Erfindung noch ein Kraftfahrzeug.

Mit dem zunehmenden Einsatz von autonomen Fahrmöglichkeiten bei Kraftfahrzeugen wird es sehr wichtig werden, die Funktionsweise autonomer Fahrzeuge und die sich daraus ergebende hohe Verlässlichkeit nahezubringen.

Die DE 10 2016 214 916 A1 zeigt ein Verfahren zum Betreiben eines Kraftfahrzeugs, bei welchem das Kraftfahrzeug autonom fährt und bei welchem auf einer Anzeige des Kraftfahrzeugs ein von dem Kraftfahrzeug gerade durchgeführtes oder bevorstehendes Manöver dargestellt wird. Sensorische Fähigkeiten des Kraftfahrzeugs können dabei mittels einer Anzeige für einen Fahrer sichtbar abgebildet werden.

Die DE 10 2013 021 853 A1 zeigt eine Vorrichtung und ein Verfahren zum Betreiben eines Autopiloten eines Fahrzeugs. Eine außerhalb des Fahrzeugs angeordnete Datenbrille dient zur Darstellung von Sensordaten des Fahrzeugs, wenn bei einem autonomen Fahrmanöver des Fahrzeugs ein Fehler auftritt.

Die DE 10 2011 121 948 A1 zeigt ein Verfahren, bei welchem eine Vorschau auf Aktionen eines autonomen Fahrsystems gegeben wird. Eine Anzeige eines Fahrzeugs dient dabei zur Darstellung eines geplanten autonomen Fahrmanövers des Fahrzeugs.

Die Visualisierung von Sensor-Betriebsinformationen ist bekannt aus der DE 10 2016 210611 A1, US 2017/129426 A1, US 2017/076606 A1 und DE 10 2008 036009 A1.

Die DE 10 2014 214506 A1 zeigt, dass in einem Kraftfahrzeug die von einem Radarsensor erfassten elektromagnetischen Radarwellen für einen Benutzer visualisiert werden können, um die korrekte Funktionsweise des Radarsensors zu demonstrieren.

Die DE 10 2016 211 646 A1 befasst sich mit der Idee, dass das Fahrzeug bei automatischer Längs- und Querführung mehrere mögliche Fahrmanöver dem Fahrer vorschlägt, von welchen der Fahrer eins auswählen kann und dieses ausgewählte Fahrmanöver anschließend vom Fahrzeug ausgeführt wird.

Es ist die Aufgabe der vorliegenden Erfindung, eine Lösung bereitzustellen, mittels welcher auf besonders einfach nachvollziehbare Weise eine Funktionsweise eines zumindest teilautonom fahrenden Fahrzeugs visualisiert werden kann.

Diese Aufgabe wird durch ein Verfahren zum Betreiben eines Kraftfahrzeugs sowie durch eine Anzeigeeinrichtung mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben eines Kraftfahrzeugs wird während eines zumindest teilautonomen Fahrbetriebs des Kraftfahrzeugs mittels wenigstens einer im Kraftfahrzeug angeordneten Anzeigeeinrichtung eine Anordnung und Wirkungsweise von Umfeldsensoren des Kraftfahrzeugs visualisiert, deren Sensordaten beim zumindest teilautonomen Fahrbetrieb verwendet werden. Ein teilautonomer Fahrbetrieb bedeutet, dass das Kraftfahrzeug zumindest hinsichtlich der Längsführung oder der Querführung autonom agiert, ohne dass ein Fahrer diesbezüglich selbst steuernd eingreifen muss. Genauso ist es bei dem erfindungsgemäßen Verfahren aber auch möglich, dass bei einem vollautonomen Fahrbetrieb des Kraftfahrzeugs, also bei einem Fahrbetrieb, bei welchem ein Fahrer weder in die Längsführung noch in die Querführung eingreift, mittels der im Kraftfahrzeug angeordneten Anzeigeeinrichtung die Anordnung und Wirkungsweise der Umfeldsensoren des Kraftfahrzeugs visualisiert wird.

Der Erfindung liegt dabei die Erkenntnis zugrunde, dass es mit dem zunehmenden Einsatz des autonomen Fahrens sehr wichtig werden wird, Kunden, Mitarbeitern aber auch öffentlichen Personen, wie Journalisten, die Funktionsweise autonom fahrender Fahrzeuge und die sich daraus ergebende hohe Verlässlichkeit nahezubringen. Dadurch, dass mittels der im Kraftfahrzeug angeordneten Anzeigeeinrichtung sowohl die Anordnung als auch die Wirkungsweise der Umfeldsensoren des Kraftfahrzeugs visualisiert wird, deren Sensordaten beim zumindest teilautonomen Fahrbetrieb verwendet werden, kann bei Fahrzeuginsassen des Kraftfahrzeugs eine besonders hohe Akzeptanz für den teilautonomen Fahrbetrieb oder auch für einen vollautonomen Fahrbetrieb geschaffen werden. Es wird also eine räumlich korrekte Anordnung der Umfeldsensoren des Kraftfahrzeugs visualisiert, sodass ein Fahrzeuginsasse erkennen kann, wo die Umfeldsensoren des Kraftfahrzeugs angeordnet sind. Da zudem auch die Wirkungsweise dieser Umfeldsensoren visualisiert wird, kann der Fahrzeuginsasse auf einfache Weise erkennen, was das Kraftfahrzeug von seinem Umfeld detektiert. So ist es auch möglich, mittels der Anzeigeeinrichtung zu vermitteln, wie das Kraftfahrzeug bei dem zumindest teilautonomen Fahrbetrieb oder auch beim vollautonomen Fahrbetrieb die Sensordaten verarbeitet und in die teilautonome oder vollautonome Fahrbewegungen umsetzt. Dafür ist es vorgesehen, dass eine permanente Kommunikation beziehungsweise ein Datenaustausch zwischen der betreffenden Anzeigeeinrichtung und dem Kraftfahrzeug stattfindet, wie beispielsweise über ein geeignetes Interface, zum Beispiel in Form von Bluetooth oder dergleichen.

Eine vorteilhafte Ausführungsform der Erfindung sieht vor, dass es sich bei der Anzeigeeinrichtung um eine Augmented-Reality-Brille, eine Augmented-Reality-Kontaktlinse, eine Virtual-Reality-Brille oder eine Anzeigeeinrichtung des Kraftfahrzeugs, insbesondere eine kontaktanaloge Anzeigeeinrichtung, handelt. Mittels einer Augmented-Reality-Brille ist es möglich, dass der Fahrzeuginsasse weiterhin seine Umgebung wahrnimmt, wobei Informationen zur Anordnung und Wirkungsweise der Umfeldsensoren einfach eingeblendet werden. Schaut der Fahrzeuginsasse bei aufgesetzter Augmented-Reality-Brille beispielsweise nach vorne, so zeigt die Augmented-Reality-Brille beispielsweise einen im vorderen Bereich des Kraftfahrzeugs angeordneten Sensor als Icon oder dergleichen an. Zudem kann die Augmented-Reality-Brille noch die Wirkungsweise des betreffenden Sensors durch entsprechende Überblendung der Realität mit virtuellen Inhalten visualisieren. Dreht der Fahrzeuginsasse bei aufgesetzter Augmented-Reality-Brille seinen Kopf beispielsweise nach links, so sieht er wiederum beispielsweise ein Icon der dergleichen, welches einen Sensor und seine Positionierung kennzeichnet, der seitlich am Kraftfahrzeug angeordnet ist, um die Fahrzeugumgebung zur Seite hin zu überwachen. Das gleiche kann auch mit einer Augmented-Reality-Kontaktlinse oder einer kontaktanalogen Anzeigeeinrichtung erfolgen. Bei der kontaktanalogen Anzeigeeinrichtung kann es sich beispielsweise um ein Head-up-Display oder auch um in jeweilige Scheiben der Kraftfahrzeugs integrierte Anzeigeeinrichtungen handeln. Mittels der Augmented-Reality-Brille, der Augmented-Reality-Kontaktlinse und der kontaktanalogen Anzeigeeinrichtungen ist es also möglich, dass der betreffende Fahrzeuginsasse seine reale Umgebung noch wahrnimmt, wobei mittels dieser Anzeigemittel die Anordnung und Wirkungsweise der Umfeldsensoren des Kraftfahrzeugs als Überblendung der Realität visualisiert werden können. Es ist auch möglich, dass der Fahrzeuginsasse, insbesondere wenn es sich um einen Beifahrer und nicht den Fahrer handelt, eine Virtual-Reality-Brille aufgesetzt hat und wobei mittels dieser die Anordnung und Wirkungsweise der Umfeldsensoren des Kraftfahrzeugs visualisiert wird.

Eine weitere vorteilhafte Ausführungsform der Erfindung sieht vor, dass mittels der Anzeigeeinrichtung eine jeweilige Positionierung der Umfeldsensoren am Kraftfahrzeug kenntlich gemacht sowie deren jeweilige Erfassungsbereiche visualisiert werden. Ein Fahrzeuginsasse kann also ganz einfach erkennen, wo die jeweiligen Umfeldsensoren des Kraftfahrzeugs angeordnet sind und welchen Erfassungsbereich diese überhaupt abdecken können. Insbesondere wenn die Erfassungsbereiche relativ groß sind, kann dies dazu beitragen, dass der Fahrzeuginsasse besonders beruhigt ist, wenn das Kraftfahrzeug teilautonom oder autonom fährt, da der Fahrzeuginsasse ja angezeigt bekommt, wie viel das Kraftfahrzeug tatsächlich von seiner Umgebung sensorisch erkennen kann.

Gemäß einer weiteren vorteilhaften Ausführungsform der Erfindung ist es vorgesehen, dass ein jeweiliges Sensorwirkprinzip der Umfeldsensoren mittels der Anzeigeeinrichtung visualisiert wird. So kann der Fahrzeuginsasse auf einfache Weise erkennen, ob es sich bei den jeweiligen Umfeldsensoren beispielsweise um Kameras, Lidarsensoren, Radarsensoren, Infrarotsensoren und dergleichen handelt. Dies kann zum Beispiel durch Einblendung geeigneter Symbole entsprechend des jeweiligen Sensorwirkprinzips an der Stelle erfolgen, wo der jeweilige Umfeldsensor tatsächlich angeordnet ist. Somit kann der Fahrzeuginsasse besonders einfach nachvollziehen, welches Sensorwirkprinzip den jeweiligen Umfeldsensoren zugrunde liegt, was ebenfalls dazu beitragen kann, dass der Fahrzeuginsasse den teilautonomen oder auch vollautonomen Fahrbetrieb des Kraftfahrzeugs besonders gut akzeptiert.

In weiterer vorteilhafter Ausgestaltung der Erfindung ist es vorgesehen, dass falls es sich bei zumindest einem der Umfeldsensoren um einen Radarsensor handelt, jeweilige Radarwellen mittels der Anzeigeeinrichtung visualisiert werden. Insbesondere ist es auch möglich, dass die Radarwellen, welche von einem fahrzeugexternen Objekt zum Radarsensor zurück reflektiert werden, mittels der Anzeigeeinrichtung visualisiert werden. Im Falle eines oder mehrerer Radarsensoren zur Umfelderkennung kann der Fahrzeuginsasse also sowohl einen Sichtbereich der betreffenden Sensorik als auch eine Interaktion mit der Umgebung in Form der zurückgeworfenen beziehungsweise reflektierten Radarwellen erkennen. Die Wirkungsweise der betreffenden Umfeldsensoren kann so besonders gut vom Fahrzeuginsassen verstanden werden. Ganz allgemein ist es möglich, unabhängig vom jeweiligen Typ des Umfeldsensors eine jeweilige Wirkungsweise des Umfeldsensors insbesondere mit Hilfe von weiterführenden Animationen in einem Außenbereich des Kraftfahrzeugs zu vermitteln, sodass der Fahrzeuginsasse erkennen kann, wie jeweilige Sensordaten verarbeitet und beim teilautonomen oder vollautonomen Fahrbetrieb in eine Fahrbewegung umgesetzt werden.

Eine weitere vorteilhafte ausführungsform der Erfindung sieht vor, dass die Visualisierung der Anordnung und Wirkungsweise der Umfeldsensoren des Kraftfahrzeugs automatisch gestartet wird, sobald das Kraftfahrzeug von einem manuellen Fahrmodus in zumindest einen teilautonomen Fahrmodus wechselt. Sobald ein Fahrer das Kraftfahrzeug also nicht mehr vollständig selbst steuert, sei es die Längssteuerung und/oder die Quersteuerung, so startet die Visualisierung der Anordnung und Wirkungsweise der Umfeldsensoren. Dadurch wird dem Fahrer und gegebenenfalls auch weiteren Fahrzeuginsassen ein besonders sicheres Gefühl vermittelt, da die Fahrzeuginsassen direkt erkennen können, wie die Umfeldsensoren des Kraftfahrzeugs angeordnet sind und wirken, wenn das Kraftfahrzeug nicht mehr manuell gesteuert wird. Natürlich ist es auch möglich, das automatische Starten dieser Visualisierung zu unterbinden, beispielsweise über ein entsprechendes Menü in einem Infotainmentsystem des Kraftfahrzeugs, sodass ein Fahrzeuginsasse auswählen kann, ob er das automatische Starten der Visualisierung der Anordnung und Wirkungsweise der Umfeldsensoren möchte oder nicht.

Die erfindungsgemäße Anzeigeeinrichtung ist in einem Kraftfahrzeug anordnenbar und dazu eingerichtet, während eines zumindest teilautonomen Fahrbetriebs des Kraftfahrzeugs eine Anordnung und Wirkungsweise von Umfeldsensoren des Kraftfahrzeugs zu visualisieren, deren Sensordaten beim zumindest teilautonomen Fahrbetrieb verwendet werden. Bei der Anzeigeeinrichtung kann es sich um eine Augmented-Reality-Brille, eine Augmented-Reality-Kontaktlinse, eine Virtual-Reality-Brille oder eine Anzeigeeinrichtung, welche im Kraftfahrzeug verbaut werden kann, handeln. Bei letzterer kann es sich insbesondere um eine kontaktanaloge Anzeigeeinrichtung handeln. Vorteilhafte Ausgestaltungen des erfindungsgemäßen Verfahrens sind als vorteilhafte Ausgestaltungen der erfindungsgemäßen Anzeigeeinrichtung und umgekehrt anzusehen, wobei die Anzeigeeinrichtung insbesondere Mittel zur Durchführung der Verfahrensschritte aufweist.

Eine vorteilhafte Ausführungsform der Anzeigeeinrichtung sieht vor, dass die Anzeigeeinrichtung eine Datenschnittstelle zum drahtlosen Empfangen von Daten vom Kraftfahrzeug aufweist, welche die Anordnung und Wirkungsweise der Umfeldsensoren des Kraftfahrzeugs charakterisieren. Bei der Schnittstelle kann es sich beispielsweise um ein Funkmodul handeln, mittels welchem eine Kommunikation zwischen Kraftfahrzeug und Anzeigeeinrichtung via Bluetooth oder beispielsweise WLAN möglich ist. Über die Schnittstelle ist es besonders einfach, die besagten Daten vom Kraftfahrzeug, welche die Anordnung und Wirkungsweise der Umfeldsensoren des Kraftfahrzeugs charakterisieren, an die Anzeigeeinrichtung zu übertragen. Insbesondere wenn es sich um eine mobile Anzeigeeinrichtung, wie zum Beispiel eine Augmented-Reality-Datenbrille oder dergleichen handelt, muss die Anzeigeeinrichtung nicht erst aufwändig verkabelt beziehungsweise kabelgebunden mit dem Kraftfahrzeug verbunden werden, um die Daten empfangen zu können.

Das erfindungsgemäße Kraftfahrzeug ist dazu ausgelegt, zumindest teilautonom zu fahren und weist eine Datenschnittstelle zum drahtlosen Aussenden von Daten an die vorstehend genannte Anzeigeeinrichtung auf, wobei die Daten eine Anordnung und Wirkungsweise von Umfeldsensoren des Kraftfahrzeugs charakterisieren, deren Sensordaten das Kraftfahrzeug beim zumindest teilautonomen Fahrbetrieb verwendet.

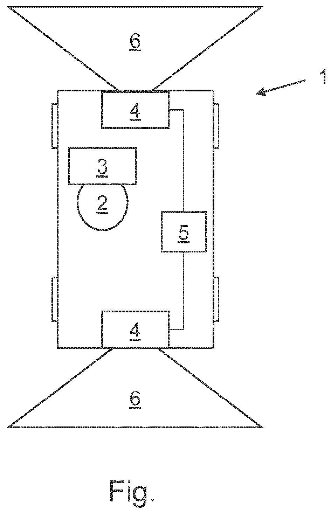

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine stark schematisierte Darstellung eines Kraftfahrzeugs, in welchem ein Fahrzeuginsasse mit aufgesetzter Augmented-Reality-Brille sitzt, mittels welcher eine Anordnung und Wirkungsweise von Umfeldsensoren des Kraftfahrzeugs visualisiert werden.

Ein Kraftfahrzeug 1 ist in einer stark schematisierten Darstellung in der einzigen Figur gezeigt. In dem Kraftfahrzeug 1 sitzt ein Fahrzeuginsasse 2 mit einer aufgesetzten Augmented-Reality-Brille 3. Das Kraftfahrzeug 1 umfasst mehrere nur schematisch angedeutete Umfeldsensoren 4 sowie eine fahrzeugseitige Datenschnittstelle 5 zum drahtlosen Aussenden von Daten an die Augmented-Reality-Brille 3, wobei die Daten eine Anordnung und Wirkungsweise der Umfeldsensoren 4 des Kraftfahrzeugs 1 charakterisieren, deren Sensordaten das Kraftfahrzeug 1 beim teilautonomen und vollautonomen Fahrbetrieb verwendet. Die Augmented-Reality-Brille 3 weist ebenfalls eine hier nicht näher dargestellte Datenschnittstelle auf, welche mit der Datenschnittstelle 5 des Kraftfahrzeugs 1 drahtlos kommunizieren kann, um die besagten Daten zu empfangen.

Sobald das Kraftfahrzeug 1 teilautonom oder vollautonom fährt, werden mittels der Augmented-Reality-Brille 3 sowohl die Anordnung als auch die Wirkungsweise der Umfeldsensoren 4 des Kraftfahrzeugs 1 visualisiert. Mittels der Augmented-Reality-Brille 3 wird beispielsweise eine jeweilige Positionierung der Umfeldsensoren 4 am Kraftfahrzeug 1 kenntlich gemacht. Blickt der Fahrzeuginsasse 2 durch die Augmented-Reality-Brille 3 nach vorne, so bekommt er beispielsweise über ein entsprechendes virtuelles Symbol, welches mittels der Augmented-Reality-Brille 3 eingeblendet wird, die Position des vorderen Umfeldsensors 4 kenntlich gemacht.

Blickt der Fahrzeuginsasse 2 durch Verschwenken seines Kopfs nach hinten, so bekommt er beispielsweise wiederum durch ein anderes Symbol die Positionierung des hinteren Umfeldsensors 4 kenntlich gemacht. Zudem kann die Augmented-Reality-Brille 3 auch jeweilige Erfassungsbereiche 6 der Umfeldsensoren 4 kenntlich machen. Blickt der Fahrzeuginsasse 2 durch eine Windschutzscheibe des Kraftfahrzeugs 1 nach vorne, so blendet die Augmented-Reality-Brille 3 den Erfassungsbereich 6 ein, sodass der Fahrzeuginsasse 2 beim Blick nach vorne erkennen kann, wie weit der Umfeldsensor 4 beispielsweise nach vorne blicken und die Fahrzeugumgebung erfassen kann. Das gleiche gilt auch für den hinteren Umfeldsensor 4.

Natürlich kann das Kraftfahrzeug 1 auch weitere hier nicht dargestellte Umfeldsensoren aufweisen, welche beispielsweise einen seitlichen Umfeldbereich des Kraftfahrzeugs 1 erfassen und abdecken. Ein jeweiliges Sensorwirkprinzip der Umfeldsensoren 4 kann mittels der Augmented-Reality-Brille 3 ebenfalls visualisiert werden. Handelt es sich beispielsweise bei den Umfeldsensoren 4 um Radarsensoren, so können animierte Radarwellen mittels der Augmented-Reality-Brille 3 visualisiert werden. Diese werden mittels der Augmented-Reality-Brille 3 beispielsweise so angezeigt, dass sie den Erfassungsbereich 6 kenntlich machen. Alternativ ist es auch möglich, dass der Erfassungsbereich 6 als eine Art Kegel eingeblendet wird, wobei die Radarwellen zusätzlich noch angezeigt werden. Zudem kann es auch vorgesehen sein, dass die Radarwellen, welche von einem fahrzeugexternen Objekt zum betreffenden als Radarsensor ausgebildeten Umfeldsensor 4 zurück reflektiert werden, mittels der Augmented-Reality-Brille 3 visualisiert werden.

Der Fahrzeuginsasse 2 kann mittels der Augmented-Reality-Brille 3 also während der Fahrt die für die teil- oder vollautonome Fahrt erforderlichen Umfeldsensoren 4 räumlich korrekt verortet angezeigt bekommen. Zudem ist es auch möglich, die Wirkungsweise in der visuellen Darstellung kenntlich zu machen, sowie auch mittels weiterführender Animationen im Außenbereich des Kraftfahrzeugs 1 vermittelt wird, wie das Kraftfahrzeugs 1 die vorliegenden Sensordaten verarbeitet und in die teilautonome oder vollautonome Fahrbewegung umsetzt.

Vor allem kann es auch vorgesehen sein, dass die Visualisierung der Anordnung und Wirkungsweise der Umfeldsensoren 4 des Kraftfahrzeugs 1 automatisch gestartet wird, sobald das Kraftfahrzeug 1 von einem manuellen Fahrmodus in einen teilautonomen oder vollautonomen Fahrmodus wechselt.

Die vorstehend erläuterte Funktionsweise ist nicht nur auf die Augmented-Reality-Brille 3 beschränkt. Statt der Augmented-Reality-Brille 3 können beispielsweise auch Augmented-Reality-Kontaktlinsen, Virtual-Reality-Brillen oder verschiedenste Anzeigeeinrichtungen, die im Kraftfahrzeug 1 verbaut sind, zum Einsatz kommen. Bei letzterem können insbesondere kontaktanaloge Anzeigeeinrichtungen sehr hilfreich sein. So kann beispielsweise ein kontaktanaloges Head-up-Display verwendet werden, um die Anordnung und Wirkungsweise der Umfeldsensoren 4 zu visualisieren. Die Kontaktanalogie ist eine spezielle Form der Augmented Reality. Hier verschmelzen die eingeblendeten Informationen mit der Umwelt. Die eingeblendeten Informationen erscheinen perspektivisch korrekt an dem Ort, auf den sie sich jeweils beziehen und haften Objekten in der Umgebung quasi an. Mittels kontaktanalogen fahrzeugseitigen Anzeigeeinrichtungen ist es also möglich, die Anordnung und Wirkungsweise der Umfeldsensoren 4 des Kraftfahrzeugs 1 auch ohne zusätzlich aufzusetzende Hilfsmittel zu visualisieren.

Insgesamt wird durch das erläuterte Verfahren das Sicherheitsgefühl bei Fahrzeuginsassen 2 beim teilautonomen oder vollautonomen Fahren verbessert, da Fahrzeuginsassen 2 sowohl die Anordnung als auch Wirkungsweise der Umfeldsensoren 4 des Kraftfahrzeugs 1 erkennen können, deren Sensordaten beim teilautonomen oder vollautonomen Fahrbetrieb verwendet werden.

## Patentansprüche

1. Verfahren zum Betreiben eines Kraftfahrzeugs (1), bei welchem während eines zumindest teilautonomen Fahrbetriebs des Kraftfahrzeugs (1) mittels wenigstens einer im Kraftfahrzeug (1) angeordneten Anzeigeeinrichtung (3) eine Anordnung und Wirkungsweise von Umfeldsensoren (4) des Kraftfahrzeugs (1) visualisiert wird, deren Sensordaten beim zumindest teilautonomen Fahrbetrieb verwendet werden,
**dadurch gekennzeichnet, dass**
es sich bei der Anzeigeeinrichtung (3) um eine Augmented-Reality-Brille oder eine Augmented-Reality-Kontaktlinse oder eine Virtual-Reality-Brille handelt und
mittels der Anzeigeeinrichtung (3) eine jeweilige Positionierung und Wirkungsweise der Umfeldsensoren (4) am Kraftfahrzeug (1) kenntlich gemacht sowie deren jeweilige Erfassungsbereiche (6) visualisiert werden, sodass ein Fahrzeuginsasse (2) beim Blick nach vorne bzw. hinten erkennen kann, wie weit der jeweilige Umfeldsensor (4) nach vorne bzw. hinten blicken und die Fahrzeugumgebung erfassen kann.

2. Verfahren nach Anspruch 1,
**dadurch gekennzeichnet, dass**
ein jeweiliges Sensorwirkprinzip der Umfeldsensoren (4) mittels der Anzeigeeinrichtung (3) visualisiert wird.

3. Verfahren nach einem der vorhergehenden Ansprüche,
**dadurch gekennzeichnet, dass**
falls es sich bei zumindest einem der Umfeldsensoren (4) um einen Radarsensor handelt, jeweilige Radarwellen mittels der Anzeigeeinrichtung (3) visualisiert werden.

4. Verfahren nach Anspruch 3,
**dadurch gekennzeichnet, dass**
die Radarwellen, welche von einem fahrzeugexternen Objekt zum Radarsensor zurück reflektiert werden, mittels des Anzeigeeinrichtung (3) visualisiert werden.

5. Verfahren nach einem der vorhergehenden Ansprüche, **dadurch gekennzeichnet, dass**
die Visualisierung der Anordnung und Wirkungsweise der Umfeldsensoren (4) des Kraftfahrzeugs (1) automatisch gestartet wird, sobald das Kraftfahrzeug (1) von einem manuellen Fahrmodus in zumindest einen teilautonomen Fahrmodus wechselt.

6. Anzeigeeinrichtung (3), welche in einem Kraftfahrzeug (1) anordnenbar und dazu eingerichtet ist, während eines zumindest teilautonomen Fahrbetriebs des Kraftfahrzeugs (1) eine Anordnung und Wirkungsweise von Umfeldsensoren (4) des Kraftfahrzeugs (1) zu visualisieren, deren Sensordaten beim zumindest teilautonomen Fahrbetrieb verwendet werden.

7. Anzeigeeinrichtung (3) nach Anspruch 6,
**dadurch gekennzeichnet, dass**
die Anzeigeeinrichtung (3) eine Datenschnittstelle (5) zum drahtlosen Empfangen von Daten vom Kraftfahrzeug (1) aufweist, welche die Anordnung und Wirkungsweise der Umfeldsensoren (4) des Kraftfahrzeugs (1) charakterisieren.

8. Kraftfahrzeug (1), welches dazu ausgelegt ist, zumindest teilautonom zu fahren und eine Datenschnittstelle (5) zum drahtlosen Aussenden von Daten an eine Anzeigeeinrichtung (3) nach Anspruch 6 oder 7 aufweist, wobei die Daten eine Anordnung und Wirkungsweise von Umfeldsensoren (4) des Kraftfahrzeugs (1) charakterisieren, deren Sensordaten das Kraftfahrzeug (1) beim zumindest teilautonomen Fahrbetrieb verwendet.

## Claims

1. A method for operating a motor vehicle (1), in which, during an at least partially autonomous driving operation of the motor vehicle (1), by means of at least one display device (3) arranged in the motor vehicle (1), an arrangement and a mode of action of surround sensors (4) of the motor vehicle (1) is visualized, the sensor data from which are used in the at least partially autonomous driving operation,
**characterized in that**
the display device (3) is augmented reality glasses, an augmented reality contact lens, or virtual reality glasses, and
by means of the display device (3), the respective positioning and mode of action of the surround sensors (4) on the motor vehicle (1) are identified and their respective detection regions (6) are visualized, such that a vehicle occupant (2) looking forward or backward can see how far the surround sensor (4) in question can view forward or backward and detect the vehicle surroundings.

2. The method according to claim 1,
**characterized in that**
a relevant sensor operating principle of the surround sensors (4) is visualized by means of the display device (3).

3. The method according to any of the preceding claims,
**characterized in that**
if at least one of the surround sensors (4) is a radar sensor, respective radar waves are visualized by means of the display device (3).

4. The method according to claim 3,
**characterized in that**
the radar waves which are reflected back from an object outside the vehicle to the radar sensor are visualized by means of the display device (3).

5. The method according to any of the preceding claims,
**characterized in that**
the visualization of the arrangement and mode of action of the surround sensors (4) of the motor vehicle (1) is started automatically once the motor vehicle (1) switches from a manual driving mode into at least a partially autonomous driving mode.

6. A display device (3), which can be arranged in a motor vehicle (1) and is configured to, during an at least partially autonomous driving operation of the motor vehicle (1), visualize an arrangement and a mode of action of surround sensors (4) of the motor vehicle (1), the sensor data from which are used in the at least partially autonomous driving operation.

7. The display device (3) according to claim 6,
**characterized in that**
the display device (3) comprises a data interface (5) for wirelessly receiving data from the motor vehicle (1), which data characterize the arrangement and mode of action of the surround sensors (4) of the motor vehicle (1).

8. A motor vehicle (1), which is configured to drive at least partially autonomously and comprises a data interface (5) for wirelessly transmitting data to a display device (3) according to claim 6 or 7, wherein the data characterize an arrangement and mode of action of surround sensors (4) of the motor vehicle (1), the sensor data from which are used by the motor vehicle (1) in the at least partially autonomous driving operation.

## Revendications

1. Procédé de fonctionnement d'un véhicule à moteur (1), dans lequel, pendant un mode de conduite au moins partiellement autonome du véhicule à moteur (1), une disposition et un mode de fonctionnement de capteurs d'environnement (4) du véhicule à moteur (1) seront visualisés à l'aide d'au moins un dispositif d'affichage (3) agencé dans le véhicule à moteur (1), dont les données de capteur seront utilisées pendant le mode de conduite au moins partiellement autonome,
**caractérisé en ce que**
le dispositif d'affichage (3) est une paire de lunettes de réalité augmentée ou une lentille de contact de réalité augmentée ou une paire de lunettes de réalité virtuelle et
à l'aide du dispositif d'affichage (3), un positionnement et un mode de fonctionnement, respectifs, des capteurs d'environnement (4) sur le véhicule à moteur (1) seront indiqués et leurs zones de détection (6) respectives seront visualisées, de sorte qu'un passager (2) peut voir, en regardant vers l'avant ou vers l'arrière, jusqu'où le capteur d'environnement (4) respectif peut regarder vers l'avant ou vers l'arrière et détecter l'environnement du véhicule.

2. Procédé selon la revendication 1, **caractérisé en ce que**
un principe de fonctionnement de capteur respectif des capteurs d'environnement (4) sera visualisé à l'aide du dispositif d'affichage (3).

3. Procédé selon l'une des revendications précédentes,
**caractérisé en ce que**
si au moins l'un des capteurs d'environnement (4) est un capteur radar, les ondes radar respectives seront visualisées à l'aide du dispositif d'affichage (3).

4. Procédé selon la revendication 3,
**caractérisé en ce que**
les ondes radar qui seront réfléchies par un objet externe au véhicule en retour vers le capteur radar seront visualisées à l'aide du dispositif d'affichage (3).

5. Procédé selon l'une des revendications précédentes,
**caractérisé en ce que**
la visualisation de la disposition et du mode de fonctionnement des capteurs d'environnement (4) du véhicule à moteur (1) sera démarrée automatiquement dès que le véhicule à moteur (1) passe d'un mode de conduite manuel à un mode de conduite au moins partiellement autonome.

6. Dispositif d'affichage (3) qui peut être agencé dans un véhicule à moteur (1) et qui est conçu pour visualiser, pendant un mode de conduite au moins partiellement autonome du véhicule à moteur (1), une disposition et un mode de fonctionnement de capteurs d'environnement (4) du véhicule à moteur (1), dont les données de capteur seront utilisées pendant le mode de conduite au moins partiellement autonome.

7. Dispositif d'affichage (3) selon la revendication 6,
**caractérisé en ce que**
le dispositif d'affichage (3) comprend une interface de données (5) pour recevoir sans fil des données du véhicule à moteur (1), lesquelles caractérisent la disposition et le mode de fonctionnement des capteurs d'environnement (4) du véhicule à moteur (1).

8. Véhicule à moteur (1) qui est conçu pour une conduite au moins partiellement autonome et comprend une interface de données (5) pour transmettre sans fil des données à un dispositif d'affichage (3) selon la revendication 6 ou 7, dans lequel les données caractérisent une disposition et un mode de fonctionnement de capteurs d'environnement (4) du véhicule à moteur (1), dont les données de capteur sont utilisées par le véhicule à moteur (1) en mode de conduite au moins partiellement autonome.
